# EUROPÄISCHE PATENTANMELDUNG

(11) **EP 2 487 017 A1**
(43) Veröffentlichungstag der Anmeldung: **15.08.2012**
(21) Anmeldenummer: 12150165.4
(22) Anmeldetag: 04.01.2012
(51) Int. Cl.: B29B 9/06, B29C 47/88, B29C 47/92

(54) **Vorrichtung und Verfahren zum Herstellen von Polymergranulat**

(30) Priorität: 11.02.2011 DE 102011003986
(71) Anmelder: Krones AG, 93073 Neutraubling (DE)
(72) Erfinder: Wasmuht, Klaus, 91792 Ellingen (DE); Adrian, Eckehard, 23701 Süsel (DE); Preiss, Johannes, 93055 Regensburg (DE)
(74) Vertreter: Grünecker, Kinkeldey, Stockmair & Schwanhäusser

(57) **Zusammenfassung**

Die Erfindung betrifft eine Vorrichtung zum Herstellen von Polymergranulat (6), umfassend ein Mittel (8) zum kontinuierlichen Erzeugen eines Polymerstrangs (4) aus einer Polymerschmelze (2) und ein Schneidemittel (10) zum Schneiden des resultierenden Polymerstrangs (4), dadurch gekennzeichnet, dass das Schneidemittel (10) ein relativ zum Mittel zum Erzeugen des Polymerstrangs (4) abstandsveränderlich angeordnet ist. Weiter betrifft die Erfindung ein Verfahren zum Herstellen von Polymergranulat (6), umfassend die Schritte des kontinuierlichen Erzeugens eines Polymerstrangs (4) aus einer Polymerschmelze (2) und des Schneidens des resultierenden Polymerstrangs (4) zu Polymergranulat (6), dadurch gekennzeichnet, dass die Zeitdauer zwischen dem Erzeugen des Polymerstrangs (4) und dem Schneideschritt variabel durch das Verändern des Abstands eines Schneidemittels (10) relativ zu einem Mittel (8) zum Erzeugen des Polymerstrangs (4) einstellbar ist.

## Beschreibung

Die Erfindung bezieht sich auf eine Vorrichtung zum Herstellen von Polymergranulat, umfassend ein Mittel zum kontinuierlichen Erzeugen eines Polymerstrangs aus einer Polymerschmelze und ein Schneidemittel zum Schneiden des resultierenden Polymerstrangs, sowie auf ein Verfahren zum Herstellen von Polymergranulat, umfassend die Schritte des kontinuierlichen Erzeugens eines Polymerstrangs aus einer Polymerschmelze und des Schneidens des resultierenden Polymerstrangs zu Polymergranulat.

Polymergranulate werden üblicherweise mittels eines kontinuierlichen Schneckenknet- und Extrudierverfahrens hergestellt, bei denen ein festes Polymeredukt durch Zuführen von thermischer Energie und/oder mechanischen Scherkräften in die Schmelze überführt wird und der resultierende Polymerstrang über einen Schneideprozess in Polymergranulat zerschnitten wird. Dabei lässt sich der Granulierungsvorgang allgemein in zwei Unterklassen einteilen.

Zum einen kann der Schneideprozess in der Schmelze direkt nach dem Austritt des Polymerstrangs aus der Schneckenknet- und Extrudiervorrichtung erfolgen. Insbesondere ist hier die Unterwassergranulierung zu nennen, wie sie z. B, in DE 20 300 009 U1, US 6,217,802 B1, WO 01/94088 A2 oder DE 69 621 101 T2 beschrieben ist.

Zum anderen kann der Schneideprozess erst nach Abkühlen und Verfestigen des Polymerstrangs erfolgen, d.h. der Granulierungsvorgang ist eine sogenannte Feststoffgranulierung, bei dem der bereits abgekühlte, feste Polymerstrang durch ein Schneidwerk in Granulat, d.h. sogenannten Pellets, geschnitten wird. Im Stand der Technik erfolgt das Zerschneiden des Förderstrangs bei der Feststoffgranulierung immer zum gleichen, durch die Kühlstrecke, d. h. durch den Abstand des Extruders zum Schneidwerk festgelegten Zeitpunkt.

Insbesondere bei der Herstellung von PET Granulat beinhalten herkömmliche Anlagen eine nachfolgende Kristallisationseinheit, die in einer Inline-Ausführung betrieben wird, und bei der das zunächst in amorpher Form vorliegende Granulat nach dem Schneideprozess langsam weiter abgekühlt wird, so dass das Polymermaterial im Granulat kristallisieren kann. Der Schneideschritt zu Polymergranulat erfolgt dabei bei einer möglichst hohen Temperatur, so dass die Restwärme im Granulat für den nachfolgenden Kristallisationsschritt verwendet werden kann. Bei einer ungenügenden Abkühlrate des Polymerstrangs besteht allerdings das Problem, dass das Granulat verklebt und agglomeriert, weil die Temperatur des Polymerstrangs zum Zeitpunkt des Schneideprozesses nicht tief genug war. Verklebtes und agglomeriertes Granulat kann häufig nicht weiterverarbeitet werden, d. h. ist als Ausschuss zu betrachten. Weiter kann ein Verstopfen der Vorrichtung erfolgen, so dass das Granulierungsverfahren zum Reinigen gestoppt werden muss.

Um dies zu vermeiden, wird in herkömmlichen Verfahren oftmals aus Sicherheitsgründen die Temperatur des abzukühlenden Polymerstrangs vor dem Schneidschritt weiter abgesenkt, als eigentlich nötig wäre. Diese Sicherheitsmaßnahme ist insbesondere vor dem Hintergrund variierender Polymereigenschaften, d. h. Inhomogenitäten der Materialzusammensetzung des Polymerstrangs nötig, da solche Inhomogenitäten mit einer Variabilität der Glasübergangstemperatur Tg einhergehen. Dies wiederum bedingt eine Verlängerung der Kühlstrecke und/oder ein zusätzliches Absenken der Kühltemperatur, so dass im Stand der Technik der Kühlprozess mit einem hohen Energieaufwand verknüpft ist. Insbesondere bei einer Vorrichtung mit einer nachfolgenden Kristallisationseinheit kann eine zu geringe Temperatur des Polymergranulats beim Schneideschritt auch dazu führen, dass die Kristallisation des Polymermaterials im Granulat ohne zusätzliche Zuführung von thermischer Energie erschwert oder verhindert wird, so dass die herkömmlichen Anlagen aus energetischer Sicht verbesserungsfähig sind.

Die Aufgabe der vorliegenden Erfindung liegt in der Bereitstellung einer Vorrichtung und eines Verfahrens zum Herstellen von Polymergranulat, die im Vergleich zu herkömmlichen Vorrichtungen und Verfahren die Möglichkeit bieten, das Verklumpen und Agglomerieren der Polymerpellets auch bei inhomogenen Materialeigenschaften zu gewährleisten, und gleichzeitig einen effizienten und kostengünstigen Verfahrensverlauf mit sich bringen.

Diese Aufgabe wird mit einer Vorrichtung nach Anspruch 1 erfindungsgemäß dadurch gelöst, dass das Schneidemittel relativ zum Mittel zum Erzeugen des Polymerstrangs abstandsveränderlich angeordnet ist. Die Abstandsveränderung erfolgt bevorzugt in axialer Richtung.

Über eine solche Relativbewegung des Schneidmittels kann der Abstand zwischen dem Schneidemittel und dem Mittel zum Erzeugen des Polymerstrangs gezielt eingestellt werden. Dadurch kann der Zeitpunkt des Schneideschritts und somit die Temperatur des Polymerstrangs beim Schneideschritt optimiert werden, so dass die Vorrichtung platzsparend und somit kostengünstiger ausgestaltet werden kann. Weiterhin ist es dadurch möglich, auf Inhomogenitäten des Polymermaterials, d.h. zeitlich variierende Materialeigenschaften des Polymerstrangs, gezielt zu reagieren. Bei zeitlich unterschiedlichen Abkühleigenschaften des Polymerstrangs wird über ein Bewegen des Schneidemittels relativ zum Mittel zum Erzeugen des Polymerstrangs der Zeitpunkt des Scheidens gezielt variiert. d. h. die Temperatur des Polymerstrangs zum Zeitpunkt des Schneideschritts kann optimiert werden kann, wodurch eine gleichbleibend hohe Qualität der Pellets gewährleistet wird und ein Agglomerieren /Verkleben des Polymergranulats verhindert wird.

In einer bevorzugten Ausführungsform ist die Vorrichtung eine Schneckenknet- und Extrudiervorrichtung mit nachgeschaltetem Feststoffstranggranulator, wodurch eine effektive und kostengünstige Herstellung von Polymergranulat möglich ist.

Insbesondere ist bevorzugt, dass die Vorrichtung ein Mittel zum Abkühlen des Polymerstrangs umfasst. Dieses Mittel ist bevorzugt ein Wasserkühlbad mit einer Kühlvorrichtung, das zumindest teilweise zwischen dem Mittel zum Erzeugen des Polymerstrangs und dem Schneidemittel angeordnet ist, so dass sich der heiße, flüssige Polymerstrang nach dem Austritt aus der Extrudiervorrichtung zumindest teilweise im Kühlmittel befindet. Der Schneideschritt des Polymerstrangs wird dabei bevorzugt zu einem Zeitpunkt durchgeführt, an dem der Polymerstrang sich im Mittel zum Kühlen des Polymerstrangs befindet. Durch eine solche Ausgestaltung ist ein besonders effektives Kühlen des Polymerstrangs möglich, was eine weitere Effizienzsteigerung der der Vorrichtung bedingt.

In einer weiteren, bevorzugten Ausgestaltung umfasst die Vorrichtung einen Sensor zur Bestimmung der Temperatur des Polymerstrangs unmittelbar vor dem Schneidemittel. Der Begriff "unmittelbar vor dem Schneidemittel" ist hinsichtlich der Vorrichtungsausgestaltung variierbar, bedeutet aber bevorzugt einen Abstand des Sensors zum Schneidemittel von 10 cm oder weiniger, besonders bevorzugt 2 cm oder weniger. Die Art des Sensors, d. h. die Art der Temperaturbestimmung des Polymerstrangs, ist frei wählbar, insbesondere bevorzugt sind aber berührungslose, optische Temperatursensoren. Weiter ist bevorzugt, dass die Vorrichtung eine Regeleinheit umfasst, die mit dem Sensor in Verbindung steht, und über die das Mittel zum Kühlen des Polymerstrangs und/oder die Position des Schneidemittels geregelt wird.

Dadurch ist eine besonders optimierte Granulierung möglich, da über den Sensor die Bestimmung der Temperatur des Polymerstrangs unmittelbar vor dem Schneideschritt erfolgt und so eine besonders zielgerichtete Bewegung des Schneidemittels, d. h. eine Optimierung der Position des Schneidwerks relativ zum Mittel zum Erzeugen des Polymerstrangs möglich ist. Weiterhin ist durch die Verwendung der Temperatur als Mess-und Regelgröße ein zielgerichtetes Bewegen des Schneidemittels und/oder der Einstellung der Temperatur des Mittels zum Kühlen des Polymerstrangs möglich, was eine besonders effektive Vorrichtungsausgestaltung bedingt.

Insbesondere ist bevorzugt, dass das Schneidemittel und der Sensor in einer Einheit angeordnet sind und gemeinsam bewegt werden können, womit ein immer gleichbleibender Abstand zwischen der Position der Temperaturbestimmung und dem Schneideschritt gewährleistet wird.

Die oben beschriebenen Aufgaben werden weiter mit einem Verfahren nach Anspruch 7 erfindungsgemäß dadurch gelöst, dass die Zeitdauer zwischen dem Erzeugen des Polymerstrangs und dem Schneideschritt variabel durch das Verändern des Abstandes eines Schneidemittels relativ zu einem Mittel zum Erzeugen des Polymerstrangs einstellbar ist. Die Abstandsveränderung erfolgt bevorzugt in axialer Richtung.

Durch eine solche Verfahrensausgestaltung kann zielgerichtet der relative Abstand zwischen dem Mittel zum Erzeugen des Polymerstrangs und dem Schneideschritt variiert und optimiert werden, und so das Verfahren im Vergleich zu herkömmlichen Verfahren kostengünstig und bei gleichbleibend hoher Qualität des Polymergranulats durchgeführt werden. Auch kann auf Inhomogenitäten des Polymermaterials gezielt reagiert werden, wodurch eine gleichbleibend hohe Qualität es Granulats gewährleistet wird weil ein Agglomerieren / Verkleben des Polymergranulats verhindert wird.

Insbesondere ist bevorzugt, dass das Verfahren ein Schneckenknet- und Extrudierverfahren mit nachgeschalteter Feststoffgranulierung ist, wodurch eine effektive und kostengünstige Verfahrensausgestaltung möglich ist

In einer bevorzugten Ausführungsform umfasst das Verfahren zusätzlich einen Schritt des Kühlens des Polymerstrangs, wobei der Kühlschritt zumindest teilweise zwischen dem Schritt des Erzeugens des Polymerstrangs und dem Schneideschritt stattfindet. Insbesondere ist bevorzugt, dass der Schritt des Kühlens in einem Wasserkühlbad erfolgt, wobei dieses durch ein Kühlaggregat gekühlt wird. Dadurch kann das Verfahren besonders effektiv durchgeführt werden.

Eine weitere bevorzugte Ausführungsform ist dadurch gekennzeichnet, dass das Verfahren einen Schritt zur Bestimmung der Temperatur des Polymerstrangs unmittelbar vor dem Schneideschritt umfasst, bevorzugt mit einer berührungslosen, optischen Temperaturmessung. Über eine solche Temperaturmessung kann die Zeitdauer zwischen dem austritt des Polymerstrangs aus dem Mittel zum Erzeugen des Polymerstrangs und dem Schneidemittel variiert werden und somit die Position des Schneideschritts optimiert werden. Insbesondere ist dabei bevorzugt, dass das erfindungsgemäße Verfahren einen Regelungsschritt umfasst, bei dem Kühltemperatur des Mittels zum Kühlen des Polymerstrangs und/oder der Abstand des Mittels zum Erzeugen des Polymerstrangs zum Schneidemittel durch eine Bewegung des Schneidemittels geregelt wird, wobei die Temperatur des Polymerstrangs unmittelbar vor dem Schneideschritt als Regelgröße verwendet wird. Durch eine solche Regelung kann das Verfahren weiter optimiert werden, was einen kostengünstigeren Verfahrensverlauf mit einer gleichbleibend hohen Qualität des Polymergranulats gewährleistet.

Insbesondere ist bevorzugt, dass die Kühltemperatur des Mittels zum Kühlen des Polymerstrangs und/oder der Abstand des Mittels zum Erzeugen des Polymerstrangs zum Schneidemittel so geregelt wird, dass die zeitliche Temperaturschwankung des Polymerstrangs unmittelbar vor dem Schneideschritt im Bereich von 50 °C oder weniger, bevorzugt 30 °C oder weniger, besonders bevorzugt 10 °C oder weniger, beträgt.

Dadurch lassen sich Inhomogenitäten in der Materialzusammensetzung des Polymers, das eine unterschiedliche Viskosität des Polymerstrangs, sowie unterschiedliche Glastemperaturen bedingt, gezielt ausgleichen, so dass die Qualität des Verfahrens weiter verbessert werden kann.

Insbesondere ist bevorzugt, dass das Polymer ein thermoplastisches Polymer, bevorzugt ein Polyester, ein Polystyrol, ein Polyolefin, ein Polyamid oder ein Polycarbonat, besonders bevorzugt Polyethylenterephthalat, Polypropylen oder Polyethylen, oder Copolymere dieser Polymere, umfasst.

Die Erfindung und ihre Vorteile werden anhand der in den nachfolgenden Zeichnungen dargestellten Ausführungsbeispiele und Vergleichsbeispiele weiter erklärt. Dabei zeigen:
- Fig. 1: eine schematische Schnittzeichnung einer erfindungsgemäßen Vorrichtung;
- Fig. 2: eine schematische Schnittzeichnung einer bevorzugten Ausführungsform einer erfindungsgemäßen Vorrichtung.

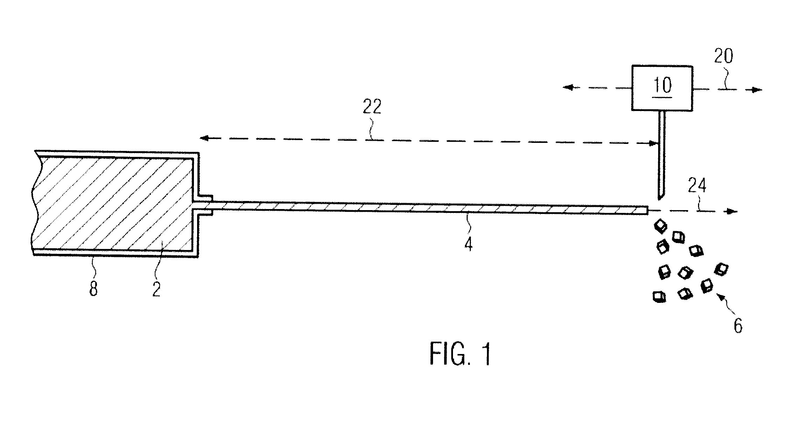

Fig. 1 zeigt schematisch eine erfindungsgemäße Vorrichtung mit einem Mittel 8 zum kontinuierlichen Erzeugen eines Polymerstrangs 4 aus einer Polymerschmelze 2, die sich im Mittel 8 befindet, wobei der Polymerstrang 4 kontinuierlich in Bewegungsrichtung 24 austritt. Auf der Höhe des Schneidemittels 10 wird durch Schneiden des Polymerstrangs 4 Polymergranulat 6 hergestellt. Das Schneidemittel 10 ist in axialer Richtung, d. h. entlang der Bewegungsrichtung 20, in beide Richtungen relativ zur Bewegungsrichtung 24 des Polymerstrangs 4 beweglich. Durch eine Bewegung des Schneidemittels 10 kann der Abstand 22 zwischen dem Mittel 8 zum Erzeugen des Polymerstrangs 4 und dem Schneidemittel 10 verändert werden.

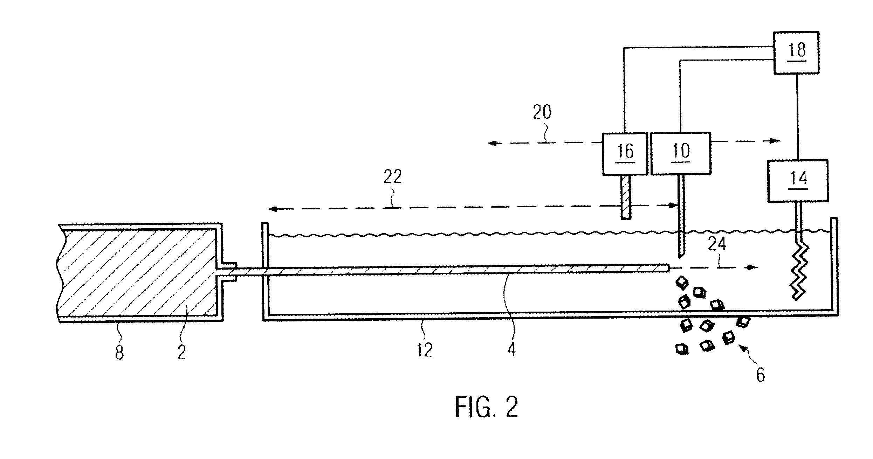

Fig. 2 stellt eine bevorzugte Ausführungsform der Vorrichtung dar, die zusätzlich ein Wasserkühlbad 12 mit Kühlaggregat 14 als Mittel zum Kühlen des Polymerstrangs 4 umfasst. Weiter besitzt in dieser Ausgestaltung der Vorrichtung das Schneidemittel 10 einen Sensor 16, der mit dem Schneidemittel 10 zusammen eine Einheit bildet. Der Sensor 6 ist so angeordnet, dass der Sensor die Temperatur des Polymerstrangs 4 unmittelbar vor der Position des Polymerstrangs 4, an dem das Schneidemittel 10 den Polymerstrang 4 in Polymergranulat 6 schneidet, misst. Die Einheit des Schneidemittels 10 und des Sensors 16 ist gemeinsam in axialer Richtung parallel zur Bewegungsrichtung 24 des Polymerstrangs 4 beweglich.

Weiter umfasst die Vorrichtung nach Fig. 2 eine Regeleinheit 18 mit der der Sensor 16, das Schneidemittel 10 und das Kühlaggregat 14 verbunden ist. Die Temperatur des Polymerstrangs 4, die mit dem Sensor 16 kontinuierlich oder intervallweise gemessen wird, dient als Regelgröße für die Steuerung und Regelung des Schneidemittels 10 und/oder des Mittels 12 zum Kühlen des Polymerstrangs 4, d. h. insbesondere dem Kühlaggregat 14.

Insbesondere ist die Position des Schneidemittels 10 entlang des Verfahrwegs 20, bzw. dadurch die Position, an der der Polymerstrang 4 geschnitten wird, regelbar. Zusätzlich oder alternativ dazu kann die Temperatur des Mittels zum Kühlen des Polymerstrangs 12 über das Kühlaggregat 14 geregelt werden.

In der Vorrichtung gemäß Fig. 1 kann ein Verfahren gemäß der vorliegenden Erfindung wie folgt durchgeführt werden:

Im Mittel 8 zum Erzeugen eines Polymerstrangs 4 wird kontinuierlich ein Polymerstrang 4 aus einer Polymerschmelze 2, die sich im Mittel 8 befindet, erzeugt. Der Polymerstrang 4 wird kontinuierlich in Bewegungsrichtung 24 bewegt. Dies geschieht durch eine Zugvorrichtung, die im Schneidemittel 10 integriert ist (nicht dargestellt). Entsprechende Ausgestaltungen sind aus dem Stand der Technik bekannt. Nach Austritt des heißen und flüssigen Polymerstrangs 4 aus dem Mittel 8 zum Erzeugen des Polymerstrangs 4 kühlt dieser ab und wird nach der Kühlstrecke 22 mit Hilfe des Schneidemittels 10 in Polymergranulat 6 geschnitten. Dabei wird durch das Bewegen des Schneidemittels 10 der Abstand relativ zum Mittel 8 zum Erzeugen des Polymerstrangs 4 eingestellt, so dass eine möglichst minimierte Verfahrstrecke 22 resultiert.

In der bevorzugten Ausführungsform nach Fig. 2 umfasst das Verfahren zusätzlich den Schritt des Kühlens des Polymerstrangs 4 in einem Wasserkühlbad 12, das über Kühlaggregat 14 gekühlt wird. Der Kühlschritt findet zwischen dem Schritt des Erzeugens des Polymerstrangs 4 und dem Schneideschritt statt. Das Verfahren umfasst weiter einen Schritt der Temperaturmessung des Polymerstrangs 4 unmittelbar vor dem Schneideschritt mittels des Sensors 16 mit einer berührungslosen, optischen Temperaturmessung. Die Temperaturmesswerte werden kontinuierlich oder intervallweise aufgezeichnet und in einem Regelungsschritt verwendet, bei dem die Temperatur des Polymerstrangs unmittelbar vor dem Schneideschritt als Regelgröße verwendet wird. Dabei wird durch das Bewegen des Schneidemittels 10 der Abstand relativ zum Mittel 8 zum Erzeugen des Polymerstrangs 4 so geregelt, dass eine möglichst minimierte Verfahrstrecke 22 resultiert. Zusätzlich oder alternativ wird die Kühltemperatur des Mittels 12 zum Kühlen des Polymerstrangs 4 über das Kühlaggregat 14 geregelt.

## Patentansprüche

1. Vorrichtung zum Herstellen von Polymergranulat (6), umfassend ein Mittel (8) zum kontinuierlichen Erzeugen eines Polymerstrangs (4) aus einer Polymerschmelze (2) und ein Schneidemittel (10) zum Schneiden des resultierenden Polymerstrangs (4), **dadurch gekennzeichnet, dass** das Schneidemittel (10) relativ zum Mittel (8) zum Erzeugen des Polymerstrangs (4) abstandsveränderlich angeordnet ist.

2. Vorrichtung nach Anspruch 1, **dadurch gekennzeichnet, dass** die Vorrichtung eine Schneckenknet- und Extrudiervorrichtung mit nachfolgendem Feststoffstranggranulator ist.

3. Vorrichtung nach Anspruch 1 oder 2, **dadurch gekennzeichnet, dass** die Vorrichtung ein Mittel (12) zum Kühlen des Polymerstrangs (4), bevorzugt ein Wasserkühlbad, umfasst, das zumindest teilweise zwischen dem Mittel (8) zum Erzeugen des Polymerstrangs und dem Schneidemittel (10) angeordnet ist, wobei das Mittel (12) zum Kühlen des Polymerstrangs (4) optional ein Kühlaggregat (14) umfasst.

4. Vorrichtung nach Anspruch 1 bis 3, **dadurch gekennzeichnet, dass** die Vorrichtung einen Sensor (16), bevorzugt einen berührungslosen, optischen Temperatursensor, zur Messung der Temperatur des Polymerstrangs (4) unmittelbar vor dem Schneidemittel (10) umfasst.

5. Vorrichtung nach Anspruch 4, **dadurch gekennzeichnet, dass** das Schneidemittel (10) und der Sensor (16) als eine Baueinheit ausgestaltet ist, die in axialer Richtung relativ zum Mittel (8) zum Erzeugen des Polymerstrangs (4) beweglich ist

6. Vorrichtung nach Anspruch 4 oder 5, **dadurch gekennzeichnet, dass** die Vorrichtung eine Regeleinheit (18) umfasst, über die das Mittel (12) zum Kühlen des Polymerstrangs (4) und/oder die Position des Schneidemittels (10) geregelt wird.

7. Vorrichtung nach Anspruch 1 bis 6, **dadurch gekennzeichnet, dass** das Polymer ein thermoplastisches Polymer, bevorzugt einen Polyester, ein Polystyrol, ein Polyolefin, ein Polyamid oder ein Polycarbonat, besonders bevorzugt Polyethylenterephthalat, Polypropylen oder Polyethylen, oder Copolymere dieser Polymere, umfasst.

8. Verfahren zum Herstellen von Polymergranulat (6), umfassend die Schritte des kontinuierlichen Erzeugens eines Polymerstrangs (4) aus einer Polymerschmelze (2) und des Schneidens des resultierenden Polymerstrangs (4) zu Polymergranulat (6), **dadurch gekennzeichnet, dass** die Zeitdauer zwischen dem Erzeugen des Polymerstrangs (4) und dem Schneideschritt variabel durch das Verändern des Abstandes eines Schneidemittels (10) relativ zu einem Mittel (8) zum Erzeugen des Polymerstrangs (4) einstellbar ist.

9. Verfahren nach Anspruch 8, **dadurch gekennzeichnet, dass** das Verfahren ein Schneckenknet- und Extrudierverfahren mit nachfolgender Feststoffgranulierung ist.

10. Verfahren nach Anspruch 8 oder 9, **dadurch gekennzeichnet, dass** das Verfahren den Schritt des Kühlens des Polymerstrangs (4), bevorzugt mit einer Wasserkühlung, umfasst, wobei der Kühlschritt zumindest teilweise zwischen dem Schritt des Erzeugens des Polymerstrangs (4) und dem Schneideschritt stattfindet.

11. Verfahren nach Anspruch 8 bis 10, **dadurch gekennzeichnet, dass** das Verfahren einen Schritt zur Messung der Temperatur des Polymerstrangs (4) unmittelbar vor dem Schneideschritt umfasst, bevorzugt mit einer berührungslosen, optischen Temperaturmessung.

12. Verfahren nach Anspruch 11, **dadurch gekennzeichnet, dass** das Verfahren einen Regelungsschritt umfasst, bei dem die Kühltemperatur des Mittels (12) zum Kühlen des Polymerstrangs (4) und/oder der Abstand des Mittels (8) zum Erzeugen des Polymerstrangs zum Schneidemittel (10) durch eine Bewegung des Schneidemittels (10) geregelt wird, wobei die Temperatur des Polymerstrangs unmittelbar vor dem Schneideschritt als Regelgröße verwendet wird.

13. Verfahren nach Anspruch 8 bis 12, **dadurch gekennzeichnet, dass** das Polymer ein thermoplastisches Polymer, bevorzugt einen Polyester, ein Polystyrol, ein Polyolefin, ein Polyamid oder ein Polycarbonat, besonders bevorzugt Polyethylenterephthalat, Polypropylen oder Polyethylen, oder Copolymere dieser Polymere, umfasst.

14. Verfahren nach Anspruch 12 und 13, **dadurch gekennzeichnet, dass** die Kühltemperatur des Mittels (12) zum Kühlen des Polymerstrangs (4) und/oder der Abstand des Mittels (8) zum Erzeugen des Polymerstrangs zum Schneidemittel (10) so geregelt wird, dass die zeitliche Temperaturschwankung des Polymerstrangs (4) unmittelbar vor dem Schneideschritt im Bereich von 50 °C oder weniger, bevorzugt 30 °C oder weniger, besonders bevorzugt 10 °C oder weniger, beträgt.
